# EUROPÄISCHE PATENTSCHRIFT

(11) **EP 0 406 635 B1**
(45) Veröffentlichungstag und Bekanntmachung des Hinweises auf die Patenterteilung: **09.03.1994**
(21) Anmeldenummer: 90111808.3
(22) Anmeldetag: 22.06.1990
(51) Int. Cl.: A61C 17/06

(54) **Speischaleninstallation**
Dental cuspidor system
Installation de crachoir dentaire

(30) Priorität: 24.06.1989 DE 3920777
(43) Veröffentlichungstag der Anmeldung: 09.01.1991
(73) Patentinhaber: Dürr-Dental GmbH & Co. KG, D-74321 Bietigheim-Bissingen (DE)
(72) Erfinder: Nonnenmacher, Eberhardt, D-7121 Ingersheim 2 (DE)
(74) Vertreter: Ostertag, Reinhard

(56) Entgegenhaltungen:
- EP-A- 0 211 808
- DE-U- 8 816 512
- DE-U- 8 904 379
- US-A- 3 613 131
- US-A- 4 307 475

## Beschreibung

Die Erfindung betrifft eine Speischaleninstallation gemäß dem Oberbegriff des Anspruches 1.

Eine derartige Installation ist in der US-A-4 307 475 beschrieben. Bei ihr ist an die von der Speischale herkommende Wasserleitung ein Gehäuse angeschlossen, welches eine Abwasser-Sammelkammer begrenzt. In einer der Seitenwände der Abwasserkammer ist eine Öffnung vorgesehen, die durch den Teller eines Servoventiles verschließbar ist, welches neben dem Abwasser-Sammelgehäuse angeordnet ist. Die Steuerung des Servoventiles erfolgt durch einen Membran-Druckfühler, der eine der Auslaßöffnung gegenüberliegende Wand der Abwasser-Sammelkammer bildet. Wird ein vorgegebener Druck in der Abwasser-Sammelkammer überschritten, so wird das Servoventil aufgesteuert und gibt einen zweifach abgewinkelten Strömungspfad zu einem Auslaßstutzen des Servoventiles frei, an welchen ein weiterer Abschnitt der Abwasserleitung angeschlossen ist, der zu einem Entsorgungsanschluß der Hausinstallation führt.

Da das Abwasser im Servoventil starken Richtungsänderungen unterworfen ist und die Durchströmguerschnitte im Servoventil nur verhältnismäßig klein sind, besteht bei der eingangs erwähnten Speischaleninstallation die Gefahr, daß das Ventil durch feste Anteile des Abwassers verschmutzt und nicht mehr richtig schließt. Das von der Speischale abgegebene Wasser enthält nämlich auch Schleim, Blut, Dentin und Amalgampartikel, und für dieses Gemisch erfolgt stromauf des Servoventiles nur eine grobe Vorreinigung durch ein normalerweise bei der Speischale vorgesehenes Drahtsieb.

Zunehmend wird heute gefordert, daß Amalgampartikel nicht mehr ins Abwasser gelangen dürfen. Zahnärztliche Arbeitsplätze werden daher heute mit Amalgamabscheideeinheiten ausgestattet, die in der Regel eine Zentrifuge enthalten. Diese Zentrifuge ist einlaßseitig mit der Mundabsaugung verbunden und steht deshalb unter Unterdruck. Klassische Speischaleninstallationen ohne in die Abwasserleitung eingefügtes Servoventil können daher nicht an die Amalgam-Abscheideeinheit angeschlossen werden.

Durch die vorliegende Erfindung soll eine Speischaleninstallation geschaffen werden, die an eine unterdruckbeaufschlagte Amalgam-Abscheideeinheit angeschlossen werden kann, ohne deren Arbeiten zu beeinträchtigen, wobei bei verhältnismäßig kleinem Weg des Ventilkörpers eine große Änderung des Durchflußquerschnittes erhalten werden soll.

Diese Aufgabe ist erfindungsgemäß gelöst durch eine Speischaleninstallation gemäß Anspruch 1.

Bei der erfindungsgemäßen Speischaleninstallation kann das Servoventil rasch auf großen Durchflußquerschnitt geöffnet werden, so daß man eine große Wasser-Durchschleusmenge von typischerweise etwa 4 l/min erreicht.

Bei der erfindungsgemäßen Speischaleninstallation ist auch die Strömungsverbindung zwischen Speischale und Abwasserleitung (diese ist im betriebsbereiten Zustand an den Einlaß der Amalgam-Abscheideeinheit angeschlossen) normalerweise gesperrt. Das Vakuum am Einlaß der Amalgam-Abscheideeinheit wird somit nicht beeinträchtigt; das Abscheiden der sehr feinen Amalgampartikel, die aus dem Mund des Patienten direkt abgesaugt werden, erfolgt mit dem gewünschten hohen Abscheidegrad. Die Tatsache, daß die Strömungsverbindung zwischen Speischale und Abwasserleitung normalerweise unterbrochen ist, hat auch zur Folge, daß keine Geräuschbelästigung durch Glucksen von Wasser erhalten wird, wie dies sonst beim Hindurchsaugen von Luft durch teilweise mit Wasser gefüllte Leitungen der Fall wäre. Hat sich vor dem Servoventil eine größere Wassermasse angestaut, so wird diese nach Öffnen des Servoventiles rasch zur Amalgam-Abscheideeinheit hin abgesaugt. Sowie diese Wassermenge weggeschafft ist, schließt das Servoventil rasch wieder. Da das Benutzen der Speischale regelmäßig dann erfolgt, wenn der Zahnarzt nicht arbeitet, bleibt die kurzfristige Änderung der Druckverhältnisse am Einlaß der Amalgam-Abscheideeinheit ohne Auswirkung auf das Arbeiten des Zahnarztes.

Vorteilhafte Weiterbildungen der Erfindung sind in Unteransprüchen angegeben.

Mit der Weiterbildung der Erfindung gemäß Anspruch 2 wird erreicht, daß der Säulenhöhenfühler in das Gehäuse des Servoventiles selbst integriert werden kann oder an dieses direkt angebaut werden kann. Die Speischaleninstallation erhält so kompakten Aufbau und läßt sich besonders einfach montieren.

Mit der im Anspruch 3 angegebenen alternativen Lösung kann man das Steuern des Servoventiles unter Verwendung von Pegeldetektoren vornehmen, die z.B. in Form von Schwimmerschaltern sehr preisgünstig zur Verfügung stehen. Bei einer Installation gemäß Anspruch 3 läßt sich die Höhe der Wassersäule, bei welcher der Säulenhöhenfühler anspricht, auch besonders einfach und anschaulich einjustieren.

Die Weiterbildung der Erfindung gemäß Anspruch 4 ist im Hinblick auf eine besonders einfache Energieversorgung des Servoventiles von Vorteil, da Unterdruckquellen und Druckluftquellen an einem zahnärztlichen Arbeitsplatz ohne weiteres zur Verfügung stehen.

Die Weiterbildung der Erfindung gemäß Anspruch 5 ist wiederum im Hinblick auf einen mechanisch einfachen und kompakten Aufbau der gesamten Speischaleninstallation von Vorteil.

Gleiches gilt für die Weiterbildung der Erfindung nach Anspruch 6.

Bei einer Speischaleninstallation gemäß Anspruch 7 kann man eine Unterdruckquelle verwenden, welche nur geringen Unterdruck bereitstellt, dafür aber großes Fördervermögen hat. Bei der in Anspruch 7 angegebenen Ausbildung des Ventilschiebers des Säulenhöhenfühlers erhält man an Ort und Stelle eine Druckübersetzung und kann so in Stellmotor einen hohen Unterdruck erzeugen. Damit ist es wiederum möglich, den Ventilkörper des Servoventiles mit verhältnismäßig großer Federkraft in die Schließstellung vorzuspannen, so daß das Servoventil gut abdichtet.

Bei einer Speischaleninstallation gemäß Anspruch 8 kann man den Unterdruck zum Bewegen des Servoventil-Stellmotors direkt vom Auslaß des Servoventiles abgreifen, der im betriebsbereiten Zustand mit dem unterdruckbeaufschlagten Einlaß der Amalgam-Abscheideeinheit verbunden ist. Damit baut eine solche Speischaleninstallation besonders kompakt.

Mit der Weiterbildung der Erfindung gemäß Anspruch 9 wird dabei erreicht, daß durch den Unterdruck-Zapfkanal keine Flüssigkeit ins Innere des Stellmotors gelangen kann.

Bei einer Speischaleninstallation gemäß Anspruch 10 erfolgt das Betätigen des Servoventiles unter Verwendung elektrischer Energie. Dies hat den Vorteil, daß der Stellmotor des Servoventiles nicht mit möglicherweise kontaminiertem Fluid in Berührung kommt, sodaß die Hygiene auch in Langzeitbetrieb gewährleistet ist.

Mit der Weiterbildung der Erfindung gemäß Anspruch 11 erhält man eine große Schließ- und Öffnungskraft auf den Ventilkörper des Servoventiles bei geringem Leistungsbedarf des Stellmotors.

Gemäß Anspruch 12 ist gewährleistet, daß auch ein nur geringe Eigensteifigkeit aufweisender Ventilkörper über verwendet werden kann, zugleich aber ein exaktes Führen des Ventilkörpers in Öffnungs- bzw. Schließrichtung gewährleistet ist.

Die Weiterbildungen der Erfindung gemäß Anspruch 13 und 14 sind im Hinblick auf eine möglichst große Durchflußrate des Servoventiles in der Offenstellung von Vorteil.

Mit der Weiterbildung der Erfindung gemäß Anspruch 15 wird erreicht, daß der Ventilkörper geringe Masse hat, sich also rasch und leicht zwischen seinen Arbeitsstellungen bewegen läßt.

Mit der Weiterbildung der Erfindung gemäß Anspruch 16 wird erreicht, daß die mittleren und hinteren Lippen des Ventilkörpers besonders gut gegen die Ventilsitzfläche gedrückt werden, und zwar auch dann, wenn sich zwischen Ventilkörper und Ventilsitzfläche größere harte Verunreinigungen befinden.

Mit der Weiterbildung der Erfindung gemäß Anspruch 17 bzw. 18 wird jeweils eine weitere Verbesserung der Dichteigenschaften des Servoventiles im Schließzustand erhalten.

Mit der Weiterbildung der Erfindung gemäß Anspruch 19 wird zum einen erreicht, daß die obere Stirnfläche des Ventilkörpers gegen Verunreinigungen geschützt ist. Auch die Führung des Ventilkörpers und die zum Vorspannen des Ventilkörpers dienende Feder sind gegen Verunreinigungen so geschützt.

Bei einer Speischaleninstallation gemäß Anspruch 20 erfüllt der auf das obere Ende des Ventilkörpers aufgesetzte Balg zugleich die Funktion eines Membranmotors.

Bei einer Speischaleninstallation gemäß Anspruch 21 kann man über den zusätzlich vorgesehenen elektrischen Kontakt zwangsweise die Saugmaschine des dentalen Arbeitsplatzes in Gang setzen, wenn eine größere Wassermenge in die Speischale gegeben wird, die Saugmaschine an sich aber gerade abgeschaltet ist, weil der Speichelheber und das Saugrohr auf die Ablage gelegt sind.

Mit der Weiterbildung der Erfindung gemäß Anspruch 22 wird die Zahl der Öffnungs- und Schließvorgänge des Servoventiles herabgesetzt, da zusätzlich zum Volumen des mit dem Eingang des Servoventiles verbundenen Leitungsteiles das Volumen des Speicherbehälters zum Speichern von Abwasser zwischen zwei Öffnungszyklen des Servoventiles zur Verfügung steht. Ein seltenes Öffnen des Servoventiles ist im Hinblick auf geringen Verschleiß desselben und im Hinblick auf geringe Geräuschbelästigung von Vorteil.

Mit der Weiterbildung der Erfindung gemäß Anspruch 23 wird erreicht, daß einerseits der Raum des Speicherbehälters bei ordnungsgemäßem Betrieb des Servoventiles voll ausgenutzt werden kann (keine Sicherheitsreserven notwendig), andererseits bei fehlerhaftem Arbeiten des Servoventiles gewährleistet ist, daß kein Abwasser aus dem Speicherbehälter austritt.

Die Weiterbildung der Erfindung gemäß Anspruch 24 ist im Hinblick auf ein zuverlässiges Arbeiten des durch einen Schwimmer zwangsgesteuerten Entlüftungsventiles auch unter den erschwerten Einsatzbedingungen, wie sie das stark verunreinigte Abwasser eines dentalen Arbeitsplatzes mit sich bringen, von Vorteil. Der Schwimmer ist leicht beweglich, trotzdem geführt, und Ablagerungen auf den Wänden des Speicherbehälters im Bereich des Schwimmers führen nicht zu nennenswert erhöhter Reibung, werden vielmehr in der Bahn der balligen Vorsprünge von diesen laufend abgekratzt.

Nachstehend wird die Erfindung anhand von Ausführungsbeispielen unter Bezugnahme auf die Zeichnung näher erläutert. In dieser zeigen:
- Figur 1:: ein Blockschaltbild der Wasserentsorgung eines dentalen Arbeitsplatzes;
- Figur 2:: eine Aufsicht auf ein Servoventil und einen Druckfühler der Installation nach Figur 1, über welche die Speischale dieser Installation an die Amalgamabscheideeinheit angeschlossen ist;
- Figur 3:: einen vertikalen Schnitt durch die in Figur 2 gezeigte Ventil/Fühlereinheit längs der abgewinkelten Schnittlinie III-III von Figur 2;
- Figur 4:: einen vertikalen Schnitt durch den Druckfühler der Ventil/Fühlereinheit längs der Schnittlinie IV-IV von Figur 3;
- Figur 5:: einen horizontalen Schnitt durch den Druckfühler der Ventil/Fühlereinheit längs der Schnittlinie V-V von Figur 4;
- Figur 6:: einen axialen, vertikalen Schnitt durch ein abgewandeltes Servoventil;
- Figur 7:: einen vertikalen Schnitt durch ein weiter abgewandeltes Servoventil;
- Figur 8:: eine Aufsicht auf das Servoventil nach Figur 7;
- Figur 9:: einen vertikalen Schnitt durch ein ähnliches Steuerventil, wie es in Figur 7 gezeigt wurde, in Verbindung mit einem dem Einlaß vorgeschalteten Abwasser-Speicherbehälter;
- Figur 10:: eine Aufsicht auf die in Figur 9 gezeigte Einheit angebaut an eine Zentrifuge zum Abscheiden von Amalgampartikeln;
- Figur 11:: einen vertikalen Schnitt durch ein weiter abgewandeltes Servoventil zum Anschließen einer Speischale an eine Amalgamabscheideeinheit;
- Figur 12:: eine ähnliche Schnittansicht wie Figur 9, in welcher jedoch ein Pegelhöhenfühler in den Abwasser-Speicherbehälter integriert ist;
- Figur 13:: einen vertikalen Längsschnitt durch ein weiter abgewandeltes Servoventil zum Anschließen einer Speischale an eine Amalgamabscheideeinheit; und
- Figur 14:: eine Aufsicht auf das Servoventil nach Figur 13.

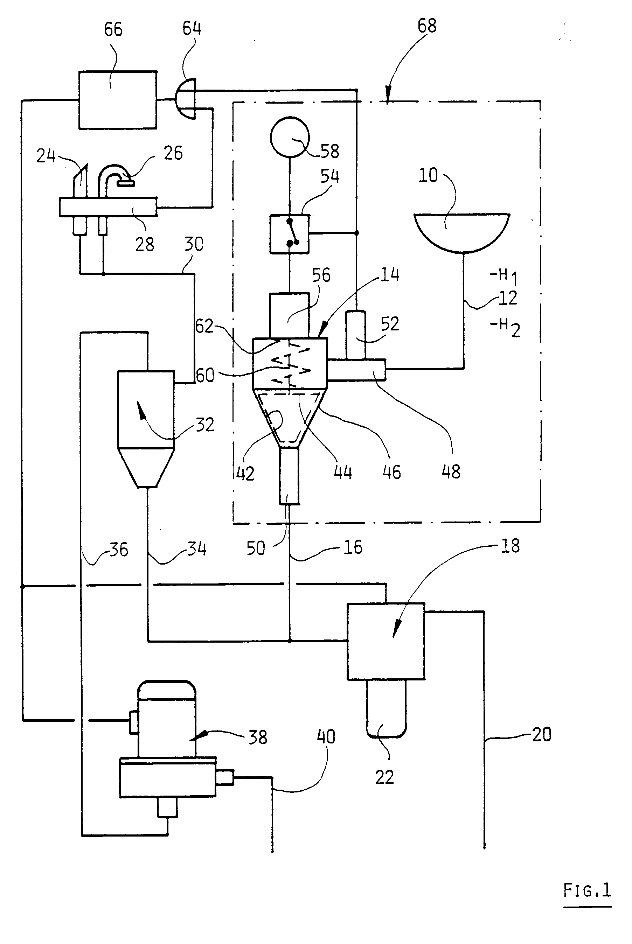

Figur 1 zeigt eine Speischale 10 eines dentalen Arbeitsplatzes, die über eine Leitung 12, ein insgesamt mit 14 bezeichnetes Servoventil und eine Leitung 16 mit einer insgesamt mit 18 bezeichneten Amalgam-Abscheideeinheit verbunden ist. Letztere gibt von im Wasser mitgeschleppten Amalgampartikeln befreites Wasser an eine Leitung 20 ab, die mit dem öffentlichen Abwassernetz verbunden ist, und sammelt die Amalgampartikel und andere Festkörperanteile des ihr zugeführten Abwassers in einem Sammelbehälter 22, der in Abständen gegen einen leeren Sammelbehälter ausgetauscht wird.

Ein Saugrohr 24 zum Absaugen von Kühlwasser aus dem Mund des Patienten sowie ein Speichelheber 26 sind auf einer Ablage 28 hängend dargestellt. Diese Saugmittel sind über eine Leitung 30 mit dem Einlaß eines Zyklons 32 verbunden, in welchem flüssige Anteile des abgesaugten Gemisches abgetrennt werden. Diese am Boden des Zyklons 32 angesammelten Flüssigkeitsanteile gelangen über eine Leitung 34 ebenfalls zum Einlaß der Amalgam-Abscheideeinheit 18.

Der Luftauslaß des Zyklons 32 ist über eine Leitung 36 mit dem Sauganschluß einer insgesamt mit 38 bezeichneten Saugmaschine verbunden. Diese gibt die angesaugte Luft an eine Leitung 40 ab, die über Dach geführt ist.

Das Servoventil 14 hat eine kegelstumpfförmige Ventilsitzfläche 42, die mit einem kegelstumpfförmigen Ventilkörper 44 zusammenarbeitet. Das mit 46 bezeichnete Gehäuse des Servoventiles 14 trägt einen Einlaßstutzen 48 und einen Auslaßstutzen 50, und auf dem Einlaßstutzen 48 ist ein Druckfühler 52 angeordnet. Dieser arbeitet grob gesprochen so, daß er dann ein Ausgangssignal erzeugt, wenn die Flüssigkeitssäule in der Leitung 12 eine Höhe H₁ überschreitet, wobei das Fühlerausgangssignal dann beendet wird, wenn die Höhe der Wassersäule unter einen Wert H₂ fällt.

Durch das Ausgangssignal des Druckfühlers 52 wird ein steuerbarer Schalter 54 betätigt, über welchen ein Stellmotor 56 des Servoventiles mit einer Energiequelle 58 verbindbar ist. Der Stellmotor 56 arbeitet auf einen Ventilschaft 60, der mit dem Ventilkörper 44 verbunden ist. Eine Schraubendruckfeder 62 dient zum Vorspannen des Ventilkörpers 44 in die Schließstellung.

Das Ausgangssignal des Druckfühlers 52 wird ferner auf einen ersten Eingang eines ODER-Gliedes 64 gegeben, dessen zweiter Eingang von der Ablage 28 her durch in diese integrierte, nicht gezeigte Fühler dann mit Signal beaufschlagt wird, wenn entweder das Saugrohr 24 oder der Speichelheber 26 von der Ablage 28 abgehoben wird. Durch das Ausgangssignal des ODER-Gliedes 64 wird ein Leistungsschaltkreis 66 angesteuert, über welchen die Amalgam-Abscheideeinheit 18 und die Saugmaschine 38 mit Energie versorgt werden.

Die in Figur 1 gezeigte Abwasserentsorgung für einen dentalen Arbeitsplatz, bei welcher die Elemente 10, 14 und 50 bis 58 insgesamt eine Speischaleneinheit 68 darstellen, arbeitet folgendermaßen:
Wird das Saugrohr 24 oder der Speichelheber 26 von der Ablage 28 abgenommen (Zahnarzt arbeitet im Mund des Patieten) so werden die Amalgam-Abscheideeinheit 18 und die Saugmaschine 38 in Gang gesetzt. Das aus dem Mund des Patienten abgesaugte Gemisch aus Luft, Wasser, Speichel, Blut, Dentrin und Amalgampartikeln gelangt zunächst in den Zyklon 32. In dessen unterem Teil sammeln sich die flüssigen und festen Bestandteile, die von dort in die Amalgam-Abscheideeinheit 18 gelangen. Diese gibt die flüssigen Bestandteile an die Leitung 20 weiter, die festen Bestandteile kommen in den Sammelbehälter 22.

Gelangt eine größere Wassermenge in die Speischale 10, z.B. dann, wenn der Patient den Mund ausspült, so spricht der Druckfühler 52 an. Falls Amalgam-Abscheideeinheit 18 und Saugmaschine 38 nicht sowieso schon laufen, werden sie durch das Ausgangssignal des Druckfühlers 52 in Gang gesetzt.

Durch das Ausgangssignal des Druckfühlers 52 wird ferner der Schalter 54 geschlossen, und der Stellmotor 56 hebt nun den Ventilkörper 44 von der Ventilsitzfläche 42 ab. Das in der Leitung 12 stehende Wasservolumen wird nun durch den am Einlaß der Amalgam-Abscheideeinheit 18 stehenden Unterdruck rasch durch das Servoventil 14 hindurch in die Amalgam-Abscheideeinheit 18 gezogen. Typische Durchsatzraten in der Offenstellung des Servoventiles betragen etwa 4 l/min. Die Höhe H der in der Leitung 12 stehenden Wassersäule vermindert sich somit rasch, und bei Erreichen der Höhe H₂ beendet der Druckfühler 52 sein Ausgangssignal, und der Ventilkörper 44 kehrt unter der Kraft der Schraubendruckfeder 62 in die Schließstellung zurück. Das über das Servonventil 14 aus der Leitung 12 angesaugte Wasser wird in der Amalgam-Abscheideeinheit 18 gleichermaßen von festen Bestandteilen befreit und gelangt dann in die Leitung 20.

Aus der oben gegebenen Beschreibung der in Figur 1 gezeigten Entsorgungsinstallation ist ersichtlich, daß die Speischale 10 praktisch nie direkt mit einer Unterdruckquelle verbunden ist, so daß einerseits das Arbeiten der Amalgam-Abscheideeinheit 18 und der Saugmaschine 38 nicht beeinträchtigt wird, andererseits auch an der Speischale 10 keine unerwünschten Geräusche entstehen.

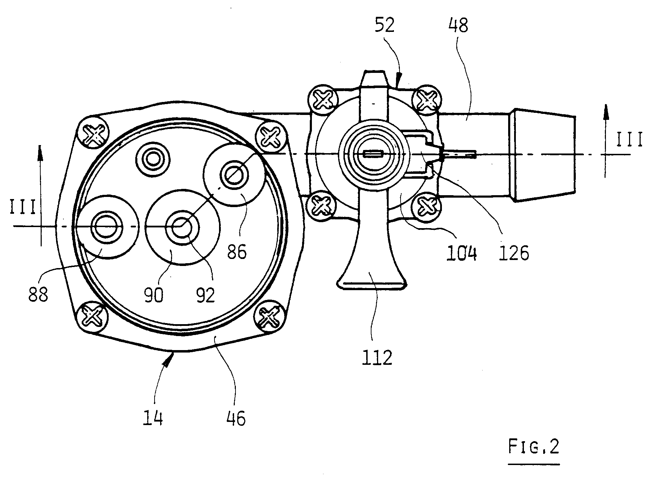

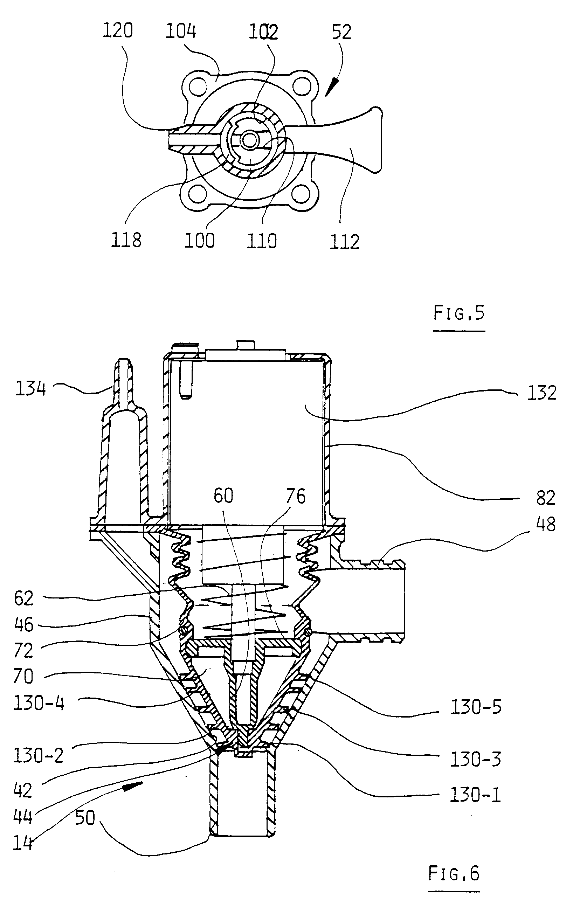

Die Figuren 2 bis 5 zeigen Einzelheiten einer ersten praktischen Ausführungsform eines Servoventiles 14 mit angebautem Druckfühler 52. Bauteile, die obenstehend unter Bezugnahme auf Figur 1 schon erläutert wurden, sind wieder mit denselben Bezugszeichen versehen und brauchen nicht nochmals im einzelnen erläutert zu werden.

Bei dem in Figuren 2 bis 5 gezeigten Servoventil ist der Ventilkörper 44 ein einstückiges Spritzteil aus elastisch verformbarem Material. An einen kegelförmigen unteren Steuerkopf 70 schließt sich ein gewellter Balgabschnitt 72 an. Am balgseitigen Ende ist der Steuerkopf 70 mit einer Lippe 74 versehen, deren Außenrand im unbelasteten Zustand etwas über die durch den Steuerkopf 70 vorgesehene Kegelfläche übersteht. Auf diese Weise erhält man besonders gute Dichteigenschaften des Servoventiles in der Schließstellung.

In den Übergangsabschnitt zwischen Steuerkopf 70 und Balgabschnitt 72 ist innen eine Federsitzplatte 76 eingeclipst, die mit dem Ventilschaft 60 verbunden ist. Letzterer hat, wie aus der Zeichnung ersichtlich, kreuzförmigen Querschnitt.

Das untere Ende des Ventilschaftes 60 ist als Zapfen 78 ausgebildet, der axial verschiebbar in eine Sackbohrung 80 eingreift, die auf der Innenseite des unteren Endes des Ventilkörpers 44 vorgesehen ist. Damit kann die Federsitzplatte 76 die Lippe 74 noch in dichte Anlage gegen die Ventilsitzfläche 42 bewegen, wenn die Hauptfläche des Steuerkopfes 70 schon an der Ventilsitzfläche 42 anliegt.

Ein Deckel 82 des Gehäuses 46 hat eine rinnenförmige Vertiefung 84, die zum einen als Federsitz für das obere Ende der Schraubendruckfeder 62 dient, darüber hinaus eine Strömungsverbindung zwischen einem ersten Anschlußstutzen 86 sowie einem zweiten Anschlußstutzen 88 herstellt, die beide an den Deckel 82 angeformt sind. Zwischen den Anschlußstutzen 86, 88 ist ein Führungsstutzen 90 des Gehäuses 46 hochgezogen, in welchem der Ventilschaft 60 läuft.

An das obere Ende des Führungsstutzens 90 ist ein weiterer Anschlußstutzen 92 angeformt, über welchen das Innere des Balgabschnittes 72 mit Unterdruck beaufschlagt werden kann, um den Steuerkopf 70 entgegen der Kraft der Schraubendruckfeder 62 von der Ventilsitzfläche 42 abzuheben.

An den Auslaßstutzen 50 ist ein Zapfstutzen 94 angeformt, welcher einen abgetrennt im Auslaßstutzen 50 nach unten verlaufenden Endabschnitt 96 aufweist.

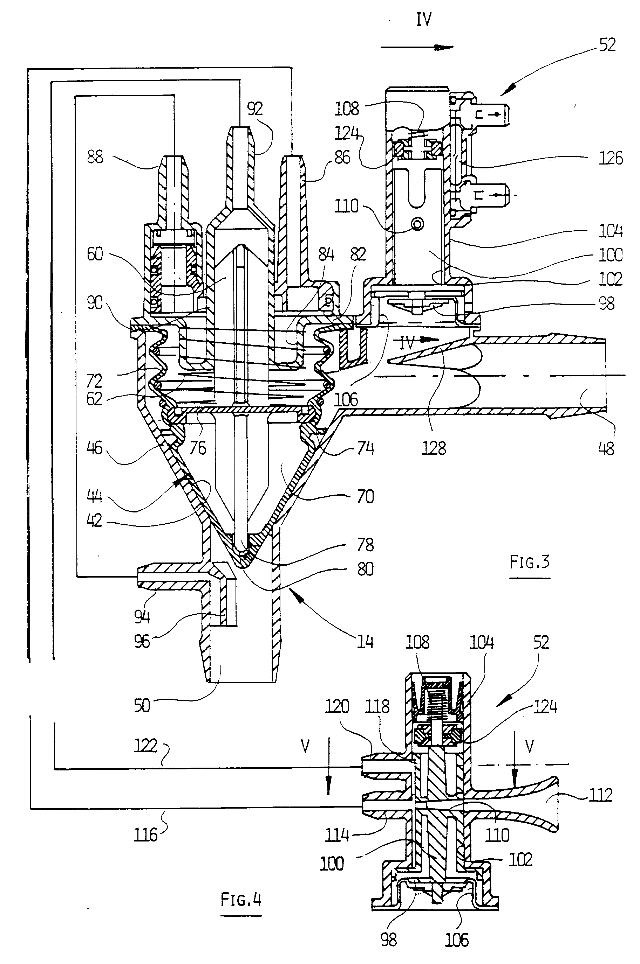

Wie insbesondere aus Figur 4 ersichtlich, hat der Druckfühler 52 einen Fühlerkolben 98, der auf einem Kolbenschaft 100 sitzt, der in einer Führungsbohrung 102 des Fühlergehäuses 104 läuft. Zur Abdichtung des Fühlerkolbens 98 gegen das Innere des Einlaßstutzens 48 ist eine flexible Membran 106 vorgesehen.

Der Fühlerkolben 98 ist durch eine Schraubendruckfeder 108 in der Zeichnung nach unten vorgespannt und kann durch Druckbeaufschlagung in die in Figur 4 wiedergegebene Stellung angehoben werden. In dieser Stellung verbindet ein im Kolbenschaft 100 vorgesehener transversaler Injektorkanal 110 einen Ansaugtrichter 112 mit einem Arbeitsstutzen 114. Letzterer ist über eine Leitung 116, die beiden Anschlußstutzen 86, 88 und die Vertiefung 84 mit dem Zapfstutzen 94 verbunden. In der in Figur 4 links gelegenen Fläche des Kolbenschaftes 100 ist eine Verbindungsnut 118 vorgesehen, die zu einem Saugstutzen 120 führt. Dieser Saugstutzen ist über eine Leitung 122 mit dem Anschlußstutzen 92 verbunden.

Bei der in Figur 4 gezeigten Stellung des Kolbenschaftes 100, die dann eingestellt wird, wenn eine Wassersäule vor dem Servoventil 14 steht, die höher ist als die Höhe hΘ1, wird somit durch den am Zapfstutzen 94 herrschenden Unterdruck Luft aus dem Ansaugtrichter 112 angesaugt und durch den Injektorkanal 110 gezogen. An der engen Stelle des Injektorkanales 110 wird so ein höherer Unterdruck erzeugt als er im Auslaßstutzen 50 herrscht, und mit diesem Unterdruck wird das Innere des Balgabschnittes 72 beaufschlagt. Dieser bewegt sich somit entgegen der Kraft der Schraubendruckfeder 62 nach oben, wodurch das in der Leitung 12 stehende Wasservolumen zur Amalgam-Abscheideeinheit 18 hin abströmen kann. Unterschreitet die Höhe der Flüssigkeitssäule in der Leitung 12 die Höhe hΘ2, ist der Kolbenschaft 100 so weit abgesunken, daß der Injektorkanal 110 nicht mehr mit dem Ansaugtrichter 112 fluchtet, wodurch die Unterdruckbeaufschlagung des Balgabschnittes 72 beendet wird. Der Ventilkörper 44 kehrt somit unter der Kraft der Schraubendruckfeder 62 in die Schließstellung zurück.

Zur Erzeugung eines zusätzlichen elektrischen Ausgangssignales, welches auf das ODER-Glied 64 gegeben werden kann, trägt der Kolbenschaft 100 einen ringförmigen Permanentmagneten 124, der mit einem auf das Fühlergehäuse 104 aufgesetzten Reed-Kontakt zusammenarbeitet. Dieser Reed-Kontakt ist dann zwischen eine Spannungsquelle und den zugeordneten Eingang des ODER-Gliedes 64 eingefügt.

Um Verunreinigungen vom Druckfühler 50 fernzuhalten, ist unter der Membran 106 eine Schikane 128 angeordnet.

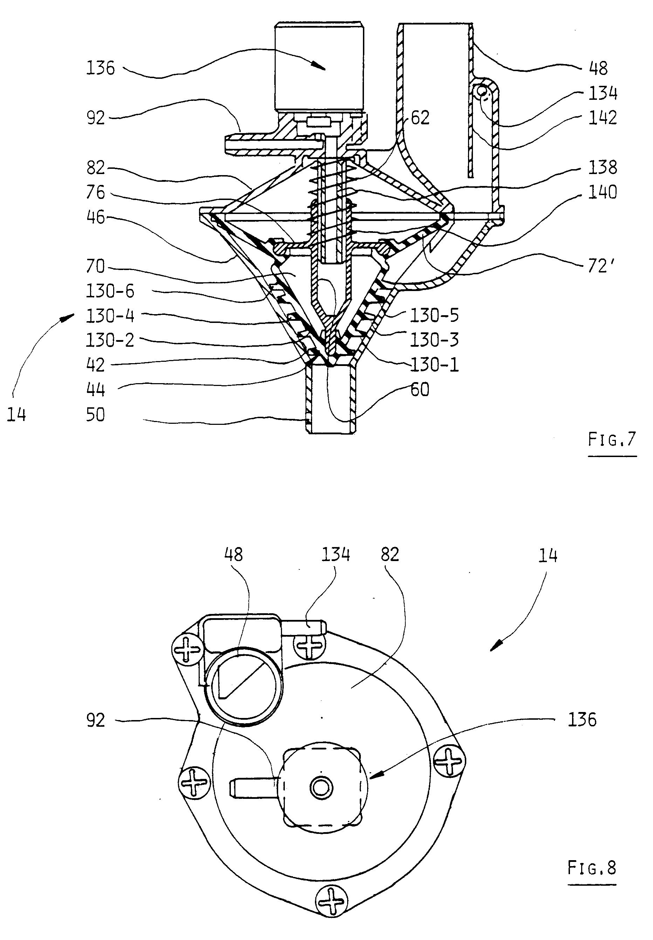

Bei dem abgewandelten Servoventil nach Figur 6 sind Ventilteile, die obenstehend unter Bezugnahme auf die Figuren 2 bis 5 in funktionsäquivalenter Form schon beschrieben wurden, wieder mit denselben Bezugszeichen versehen. Sie brauchen nachstehend nicht noch einmal im einzelnen beschrieben zu werden.

Der Steuerkopf 70 trägt nun fünf unter axialem Abstand aufeinanderfolgende Lippen 130-1 bis 130-5, die mit der Ventilsitzfläche 42 zusammenarbeiten.

Der unterdruckbeaufschlagte Ventilstellmotor ist nun ersetzt durch einen Elektromagneten 132, der über den nun als elektrischer Schalter ausgebildeten Schalter 54 mit einer Niederspannungsquelle verbindbar ist. Der Deckel 82 des Gehäuses 46 des Servoventiles 14 trägt auch einen Anschlußstutzen 134, an den ein üblicher Druckschalter über einen Schlauch angeschlossen werden kann.

Bei einem in der Zeichnung nicht wiedergegebenen abgewandelten Servoventil kann man anstelle des in Figur 6 gezeigten Elektromagneten 132 einen einfach wirkenden Druckluft-Arbeitszylinder verwenden, oder anstelle des Elektromagneten 132 und der Schraubendruckfeder 62 einen doppelt wirkenden Druckluft-Arbeitszylinder vorsehen. Die Steuerung der Verbindung zwischen den Arbeitsräumen dieser Arbeitszylinder und einer Druckluftquelle bzw. Atmosphäre kann ähnlich erfolgen wie die Unterdruckbeaufschlagung des Balgabschnittes 72 beim Ausführungsbeispiel nach Figur 3 und 4, also fluidisch, oder unter Verwendung eines Magnetventiles. Als Druckluftquelle kann ein Abzweig von einer am Behandlungsplatz sowieso schon vorhandenen Druckluftleitung dienen.

Beim weiter abgewandelten Servoventil nach Figur 7 ist an den Vakuum-Anschlußstutzen 92 ein Magnetventil 136 angeschlossen, welches auslaßseitig mit einem hohlen Führungsstab 138 in Verbindung steht, auf welchem der Ventilkörper 44 geführt ist.

Der Führungsstab 138 ist auf seiner Außenseite mit Längsnuten 140 versehen, und auf diese Weise ist die Oberseite eines Membranabschnittes 72' des Steuerkopfes 70, der den Balgabschnitt 72 des Ausführungsbeispieles nach den Figuren 2 bis 5 ersetzt, mit Unterdruck beaufschlagbar. Diese Unterdruckbeaufschlagung beginnt, wenn das Magnetventil 136 aufgesteuert wird, und endet, wenn die Erregung des Magnetventiles 136 beendet wird.

Beim Servoventil nach Figur 7 ist der Einlaßstutzen 48 vertikal nach oben ausgerichtet, und durch eine vertikale Trennwand von ihm getrennt ist wieder ein Anschlußstutzen 134 vorgesehen, an welchen eine das Arbeiten des Magnetventiles 136 steuernder Druckfühler angeschlossen werden kann.

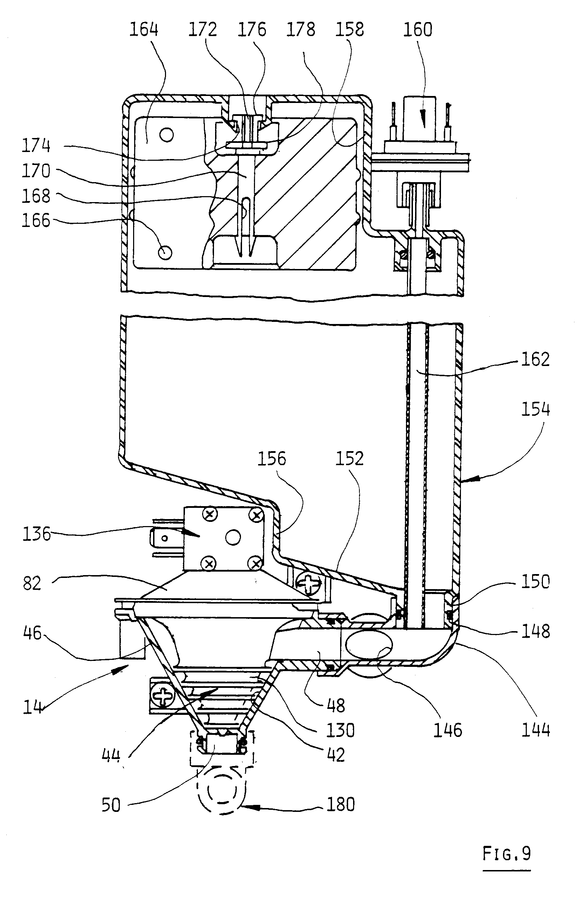

Bei der in Figur 9 gezeigten Ventil/Speichereinheit ist ein Servoventil 14 verwendet, welches in seinem strömungsmäßigen Aufbau weitgehend dem Servoventil nach Figur 7 entspricht. Die entsprechenden Ventilteile sind wieder mit denselben Bezugszeichen versehen.

An den horizontal ausgerichteten Einlaßstutzen 48 ist ein abgewinkeltes Zwischenstück 144 angesetzt, dessen in Figur 9 hinter der Zeichenebene liegender Einlaßstutzen 146 mit der von der Speischale herkommenden Leitung 12 verbunden wird. Ein zweiter, vertikal verlaufender Stutzen 148 des Zwischenstückes 144 nimmt einen unteren Verbindungsstutzen 150 auf, der an die schräggeneigte Bodenwand 152 eines insgesamt mit 154 bezeichneten Speicherbehälters angeformt ist.

Die Bodenwand 152 hat eine Stufe 156, so daß die Bodenwand insgesamt der Außenkontur des Servoventiles 14 angepaßt ist.

Der Speicherbehälter 154 hat rechteckig prismatischen Querschnitt, wobei ein oberer Behälterabschnitt eingezogen ist, wie bei 158 dargestellt. In dem so erhaltenen Rücksprung ist ein Schwimmerschalter 160 angeordnet, der über ein Rohr 162 mit dem Stutzen 148 verbunden ist.

Der eingezogene Behälterabschnitt 158 hat selbst wieder rechteckig prismatischen Querschnitt und umgibt unter kleinem Abstand einen Schwimmer 164. Dieser trägt auf seiner Außenseite Noppen 166, über welche der Schwimmer 164 im Behälterabschnitt 158 leichtgängig geführt ist.

Der Schwimmer 164 hat eine mittige Bohrung 168, in welche ein Haltestab 170 eingeclipst ist. Der Haltestab 170 hat einen kreuzförmigen Stabendabschnitt 172, der in einer Öffnung 174 läuft, welche in der oberen Wand des Speicherbehälters vorgesehen ist. Radial vorstehende Nasen 176 begrenzen die Abwärtsbewegung des Haltestabes 170.

Auf dem Stabendabschnitt 172 ist eine Dichtscheibe 178 angebracht, welche den unteren Rand der Öffnung 174 dicht verschließen kann, wenn der Schwimmer 164 entsprechend weit angehoben wird.

Bei normal arbeitendem Servoventil schaltet der Schwimmerschalter 160 so früh, daß die Dichtscheibe 178 noch nicht bis zum unteren Rand der Öffnung 174 angehoben worden ist. Arbeitet jedoch das Servoventil 14 oder der Schwimmerschalter 160 nicht korrekt, so steigt der Pegel des Abwassers im Inneren des Speicherbehälters 154 weiter an, der Schwimmer 164 wird angehoben, und die Dichtscheibe 178 verschließt die Öffnung 174. Damit kann kein weiteres Abwasser in den Speicherbehälter 154 fließen. Man erkennt das nicht korrekte Arbeiten der Ventil/Speicher-Einheit dann daran, daß Wasser sich bis in die Speischale zurückstaut. Ein Ausfließen von kontaminiertem Abwasser aus dem Speicherbehälter 154 erfolgt aber auch unter derartigen Störbedingungen nicht.

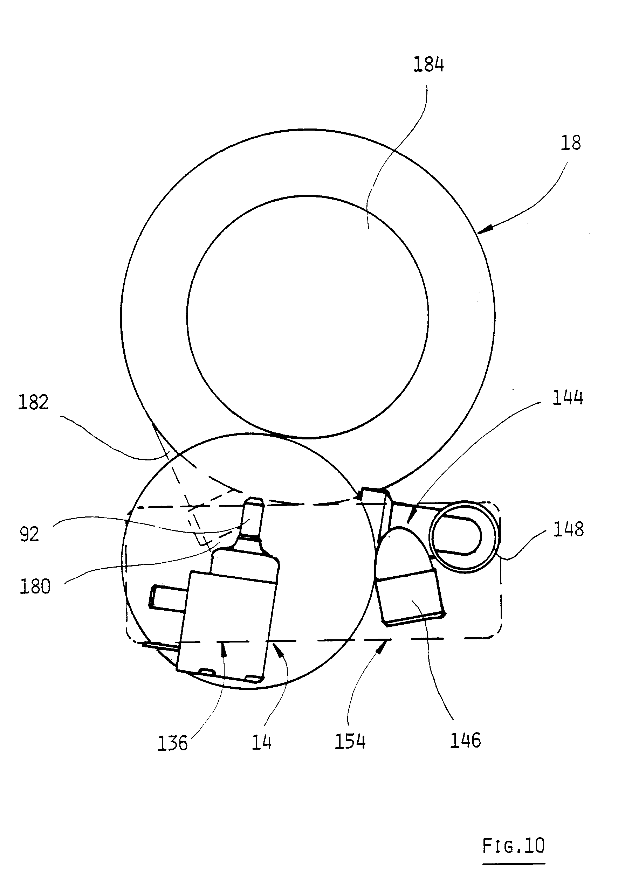

Wie aus Figur 9 und 10 ersichtlich, ist der Auslaßstutzen des Servoventiles 14 über einen Rohrwinkel 180 mit einem Einlaßstutzen 182 der in Figur 10 nur schematisch angedeuteten Amalgam-Abscheideeinheit 18 verbunden, die in der Regel eine Zentrifuge 184 umfaßt.

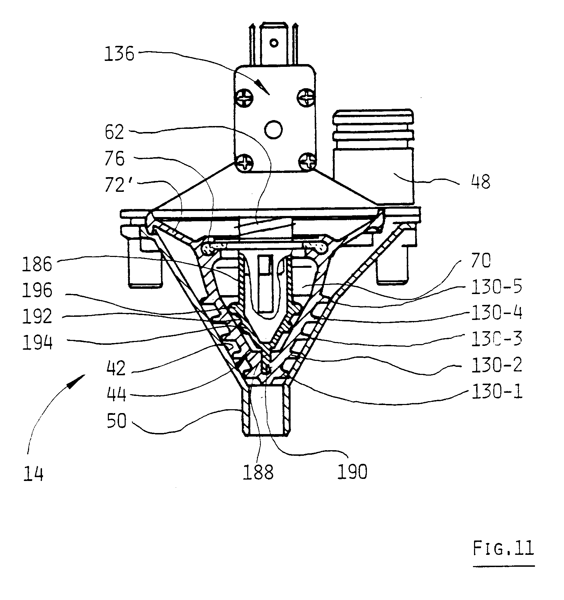

Bei dem in Figur 11 gezeigten Servoventil, welches strömungsmäßig demjenigen nach Figur 7 und nach Figur 9 entspricht, ist im Inneren des hohlen Ventilkörpers 44 ein insgesamt mit 186 bezeichneter Stützkörper vorgesehen, der an die Federsitzplatte 76 angeformt oder auf diese aufgesteckt ist.

Der Stützkörper 186 hat einen stabförmigen Endabschnitt 188, der in eine komplementäre Sackbohrung 190 des Bodens des Ventilkörpers 44 eingreift. Ein kegelstumpfförmiger Stützabschnitt 192 liegt unter Abstand parallel hinter der Innenfläche des Ventilkörpers 44 und trägt zwei in Umfangsrichtung verlaufende Stützrippen 194, 196, die in der Mitte zwischen den Lippen 130-3 und 130-4 bzw. 130-4 und 130-5 des Ventilkörpers 44 liegen. Auf diese Weise erhält man in dem größeren Radius aufweisenden Abschnitt des hohlen Steuerkopfes 70, in welchem der Steuerkopf weniger stabil ist, eine Verbesserung der Lippenabstützung in radialer Richtung. Da die Stützrippen 194, 196 zwischen diesen Lippen liegen, können letztere immer noch ausweichen, wenn sich zwischen ihnen und der Ventilsitzfläche ein größerer Amalgambrocken oder dergleichen befinden sollte.

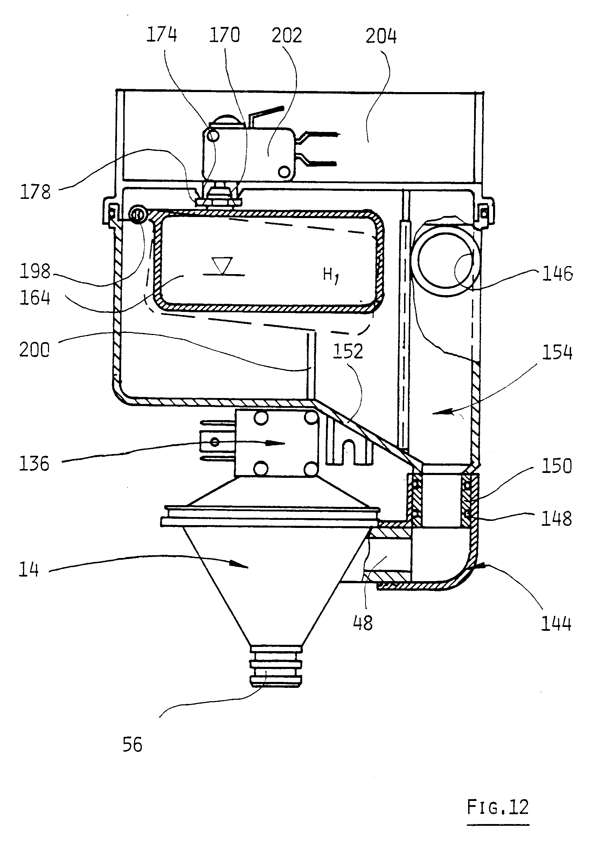

Bei einer abgewandelten Ventil/Speichereinheit, die in Figur 12 wiedergegeben ist, sind Bauteile, die obenstehend unter Bezugnahme auf Figur 9 schon in gleicher oder funktionsäquivalenter Form beschrieben wurden, wieder mit denselben Bezugszeichen versehen.

Der Schwimmer 164 ist nun um eine horizontale Achse 198 verschwenkbar im Speicherbehälter 154 angeordnet. An den vorderen und hinteren Wänden des Speicherbehälters 154 angeformte, nach innen vorstehende Anschlagrippen 200 geben eine tiefste Stellung des Schwimmers 164 vor. Der Haltestab 170 ist fest auf dem Schwimmer 164 angebracht. Seine Stirnfläche dient gleichzeitig zur Betätigung des Stößels eines Mikroschalters 202, der in die Öffnung 174 hineinragt.

Der Schwimmer 164 dient somit gleichzeitig zum Verschließen der Öffnung 174 durch die Dichtscheibe 178 und zum Betätigen des Mikroschalters 202, wenn der Pegel des im Speicherbehälter 154 akkumulierten Abwassers die Höhe H₁ erreicht.

Wie aus Figur 12 ersichtlich, ist ein oberer Abschnitt des Speicherbehälters 154 als abnehmbarer Deckel 204 ausgebildet.

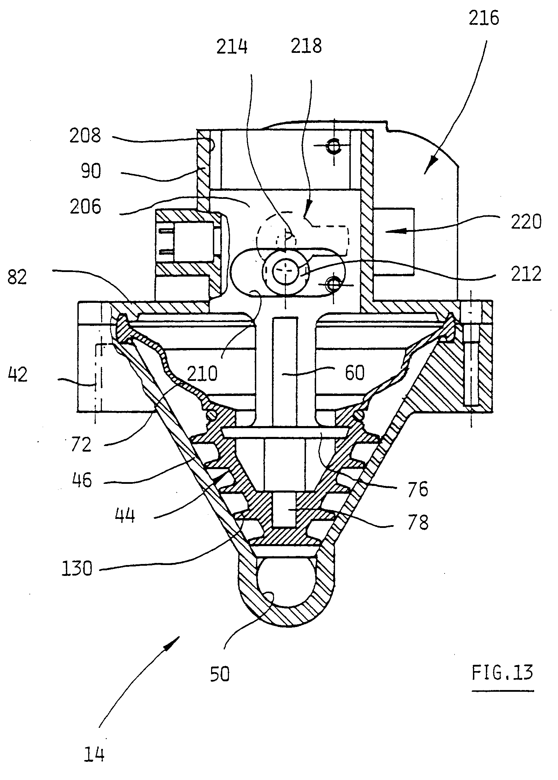

Beim abgewandelten Ausführungsbeispiel nach Figur 13 sind Ventilteile, die vorstehend insbesondere bezugnehmend auf Figur 3 schon beschrieben wurden, mit denselben Bezugszeichen versehen. Der Ventilschaft 60 hat einen plattenförmigen Endabschnitt 206, der seitlich in vertikalen Führungsnuten 208 läuft, die auf der Innenseite des Führungsstutzens 90 vorgesehen sind. Im Endabschnitt 206 ist ein transversales Langloch 210 vorgesehen, in welchem ein Kurbelzapfen 212 Aufnahme findet. Dieser wird von der Abtriebswelle 214 eines elektrischen Getriebemotors 216 gedreht.

Auf der Abtriebswelle 212 ist ein zweiarmiger Hebel 218 angeordnet, dessen Arme unter einem Winkel von 90° angestellt sind und als mit einer Reflexions-Lichtschrankeneinheit 220 zusammenarbeitende Stellungsgeberfahnen dienen. Einer der Arme trägt zugleich den Kurbelzapfen 212. Der Getriebemotor 216 wird in Öffnungsrichtung in Gang gesetzt, wenn ein ein Überschreiten des Maximalpegels H₁ anzeigendes Ausgangssignal des Druckfühlers 52 erhalten wird, und angehalten, wenn hiernach das erste Ausgangssignal der Lichtschrankeneinheit 220 vorliegt. Über den zwischen den Armen des Hebels 218 eingeschlossenen Winkel läßt sich der Öffnungshub des Ventilkörpers 44 vorgeben. Falls gewünscht, kann man diesen Hub auch durch reine Zeitsteuerung, z.B. eine monostabile Kippschaltung, vorgeben. In Schließrichtung des Ventilkörpers 44 wird der Getriebemotor 216 dann erregt, wenn der Druckfühler 52 ein dem unteren Flüssigkeitspegel H₂ zugeordnetes Signal bereitstellt. Die Schließbewegung wird mit dem ersten anschließend erhaltenen Ausgangssignal der Lichtschrankeneinheit 220 beendet.

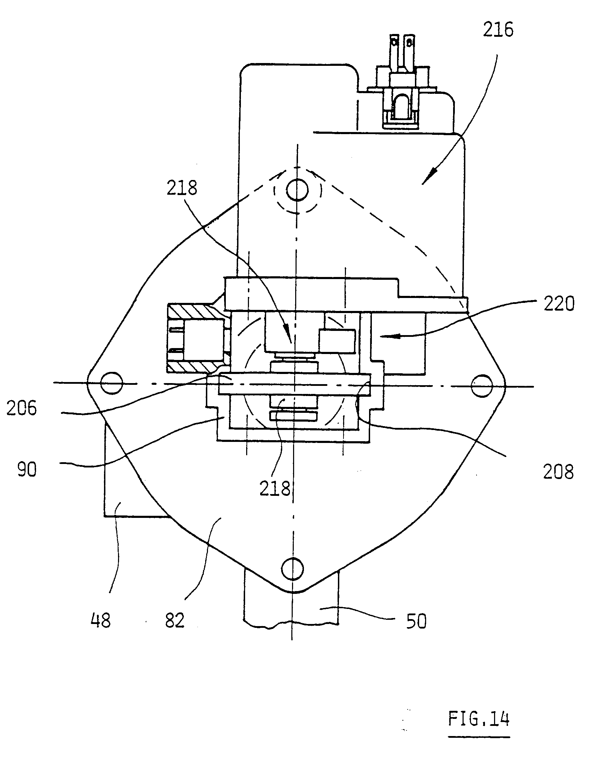

Mit dem in den Figuren 13 und 14 gezeigten Servoventil erzielt man ein sehr zuverlässiges Öffnen und Schließen des Servoventiles bei nur geringem Leistungsaufwand. Der Kurbeltrieb dient nicht nur zur zusätzlichen Kraftübersetzung in der Nachbarschaft der Schließlage des Ventilkörpers 44, er erlaubt auch die Verwendung eines einfachen, keine hohe Präzision aufweisenden Stellungsgebers zur Steuerung des Getriebemotors 216.

## Patentansprüche

1. Speischaleninstallation für einen dentalen Arbeitsplatz mit einer Speischale (10) und einer an diese angeschlossene Abwasserleitung (12, 16) und mit einem in der Abwasserleitung (12, 16) angeordneten Servoventil (14) sowie einem stromauf des Servoventiles (14) in der Abwasserleitung (12, 16) angeordneten Säulenhöhenfühler (52; 160; 164, 202), der anspricht, wenn die vor dem Servoventil (14) stehende Wassersäule einen vorgegebenen Wert (H₁) erreicht, um dann das Servoventil aufzusteuern, dadurch gekennzeichnet, daß das Servoventil (14) eine nach unten konvergierende, kegelförmige Ventilsitzfläche (42) aufweist und der Ventilkörper (44) eine der Kontur der Ventilsitzfläche angepaßte, kegelförmige Steuerfläche aufweist, die vorzugsweise eine Mehrzahl unter axialem Abstand aufeinanderfolgender, mit der Ventilsitzfläche (42) zusammenarbeitender Lippen (130-1 bis 130-5) aufweist.

2. Installation nach Anspruch 1, dadurch gekennzeichnet, daß der Säulenhöhenfühler (52) ein mit dem Einlaß des Gehäuses (46) des Servoventiles (14) in Verbindung stehender Druckfühler ist.

3. Installation nach Anspruch 1, dadurch gekennzeichnet, daß der Säulenhöhenfühler (52) einen in der Abwasserleitung (12, 16) unter Abstand stromauf des Servoventiles (14) angeordneten Pegeldetektor (160; 164, 202) aufweist.

4. Installation nach einem der Ansprüche 1 bis 3, dadurch gekennzeichnet, daß das Servoventil (14) einen mit einer Unterdruckquelle (94) oder Druckluftquelle verbindbaren Stellmotor (72) aufweist.

5. Installation nach Anspruch 4 in Verbindung mit Anspruch 3, dadurch gekennzeichnet, daß der Druckfühler (52) bzw. Pegeldetektor (160; 164, 202) mechanisch mit einem Fluidik-Stellungsgeber (100) verbunden ist, über welchen die Druckbeaufschlagung des Stellmotors (72) gesteuert wird.

6. Installation nach Anspruch 5, dadurch gekennzeichnet, daß der Druckfühler (52) einen Fühlkolben (98) aufweist und der Fluidik-Stellungsgeber einen Ventilschieber aufweist, der auf dem Kolbenschaft (100) ausgebildet ist.

7. Installation nach Anspruch 6, dadurch gekennzeichnet, daß der Ventilschieber (100) einen Injektorkanal (110) aufweist, der in der Arbeitsstellung des Druckfühlers (52) mit einem Ansaugtrichter (112) und einem mit Unterdruck beaufschlagten Arbeitsstutzen (114) fluchtet und dessen kleinen Durchmesser aufweisendes Ende in dieser Stellung mit einem Saugstutzen (120) des Fühlergehäuses (104) in Verbindung steht, an welchen der unterdruckbeaufschlagbare Stellmotor (72) des Servoventiles (14) angeschlossen ist.

8. Installation nach einem der Ansprüche 4 bis 6, dadurch gekennzeichnet, daß im Ventilgehäuse (46) ein in den Auslaßstutzen (50) ausmündender Unterdruck-Zapfkanal (94) vorgesehen ist.

9. Installation nach Anspruch 8, dadurch gekennzeichnet, daß der Unterdruck-Zapfkanal (94) einen vertikal im Auslaßstutzen (50) nach unten verlaufenden Endabschnitt (96) hat.

10. Installation nach einem der Ansprüche 1 bis 3, dadurch gekennzeichnet, daß das Servoventil (14) als Stellmotor einen in Abhängigkeit vom Ausgangssignal des Säulenhöhenfühlers (52) erregten Elektromagneten (132) aufweist.

11. Installation nach einem der Ansprüche 1-3, dadurch gekennzeichnet, daß der Stellmotor ein Elektromotor (216), vorzugsweise ein elektrischer Getriebemotor ist, und über einen Kurbeltrieb (210, 212) auf den Ventilkörper (44) des Servoventils (14) arbeitet und daß Mittel (218, 220) zum Anhalten des Elektromotors (216) bei der unteren Totpunktlage des Kurbeltriebes (210, 212) und in einer angehobenen Stellung des Kurbeltriebes vorgesehen sind.

12. Installation nach einem der Ansprüche 1-11, dadurch gekennzeichnet, daß ein Betätigungsteil (60) für den Ventilkörper (44) im Ventilgehäuse (46, 19) längs der Ventilsitzachse verschiebbar geführt (206, 208) ist.

13. Installation nach einem der Ansprüche 1 bis 12, dadurch gekennzeichnet, daß der Öffnungswinkel der Ventilsitzfläche (42) etwa 60° beträgt.

14. Installation nach einem der Ansprüche 1 bis 13, dadurch gekennzeichnet, daß die axiale Abmessung der Ventilsitzfläche (42) etwa 200 % bis etwa 300 % des Durchmessers des Auslaßkanales (48) beträgt.

15. Installation nach einem der Ansprüche 1 bis 14, dadurch gekennzeichnet, daß der Ventilkörper (44) ein hohles elastisches Spritzteil ist.

16. Installation nach Anspruch 15, gekennzeichnet durch einen im Inneren des hohlen Ventilkörpers (44) angeordneten Stützkörper (186), der eine Mehrzahl in Umfangsrichtung verlaufender Stützrippen (194, 196) trägt.

17. Installation nach Anspruch 16, dadurch gekennzeichnet, daß der axiale Abstand der Stützrippen (194, 196) dem axialen Abstand der Lippen (130-1 bis 130-5) des Ventilkörpers (44) entspricht.

18. Installation nach Anspruch 16, dadurch gekennzeichnet, daß die Stützrippen (194, 196) bezüglich der Lippen (130-1 bis 130-5) des Ventilkörpers (44) in axialer Richtung versetzt sind, vorzugsweise um eine halbe Teilung.

19. Installation nach einem der Ansprüche 1 bis 18, dadurch gekennzeichnet, daß das von der Ventilsitzfläche (42) abliegende Ende des Ventilkörpers (44) einen Balg (72, 72') trägt, welcher eine Feder (62) zum Vorspannen des Ventilkörpers (46) und/oder ein Ventil-Betätigungsteil (60) in die Schließstellung umgibt.

20. Installation nach Anspruch 19 in Verbindung mit Anspruch 4, dadurch gekennzeichnet, daß der Balg (72; 72') den mit der Unterdruckquelle (94) verbindbaren Stellmotor bildet.

21. Installation nach einem der Ansprüche 1 bis 20, dadurch gekennzeichnet, daß der Säulenhöhenfühler (52; 160; 164, 202) zusätzlich einen elektrischen Kontakt (126; 202) aufweist, der bei Erreichen der vorgegebenen Wassersäulenhöhe (H₁) betätigt wird.

22. Installation nach einem der Ansprüche 1 bis 20, dadurch gekennzeichnet, daß der Einlaß (48) des Servoventiles (14) mit einem Speicherbehälter (154) verbunden ist.

23. Installation nach Anspruch 22, dadurch gekennzeichnet, daß der Speicherbehälter (154) bei seinem oberen Ende ein durch einen Schwimmer (164) betätigtes Entlüftungsventil (174, 178) aufweist.

24. Installation nach Anspruch 23, dadurch gekennzeichnet, daß der prismatische Schwimmer (164) ballige Vorsprünge (166) aufweist, die auf einem prismatischen Abschnitt (158) des Speicherbehälters (154) laufen, der den Schwimmer (164) konturgetreu umgibt.

## Claims

1. Cuspidor installation for a dental work-place, comprising a cuspidor (10) and a waste water line (12, 16) connected thereto, and comprising a servovalve (14) arranged in the waste water line (12, 16) and also a column height sensor (52; 160; 164, 202) arranged upstream of the servovalve (14) in the waste water line (12, 16), which column height sensor responds when the column of water upstream of the servovalve (14) reaches a specified value (H₁), in order then to activate the servovalve, characterised in that the servovalve (14) has a downwardly converging conical valve seat face (42) and the valve body (44) has a conical control face which is adapted to the contour of the valve seat face and which preferably has a plurality of successive, axially spaced lips (130-1 to 130-5) which cooperate with the valve seat face (42).

2. Installation according to claim 1, characterised in that the column height sensor (52) is a pressure sensor which is in communication with the inlet of the housing (46) of the servovalve (14).

3. Installation according to claim 1, characterised in that the column height sensor (52) has a level detector (160; 164, 202) arranged upstream of and spaced from the servovalve (14) in the waste water line (12, 16).

4. Installation according to one of claims 1 to 3, characterised in that the servovalve (14) has a servomotor (72) that can be connected to a vacuum source (94) or to a source of compressed air.

5. Installation according to claim 4 in conjunction with claim 3, characterised in that the pressure sensor (52) or level detector (160; 164, 202) is mechanically connected to a fluidics position indicator (100) by means of which the application of pressure to the servomotor (72) is controlled.

6. Installation according to claim 5, characterised in that the pressure sensor (52) has a sensor piston (98) and the fluidics position indicator has a valve slide constructed on the piston shaft (100).

7. Installation according to claim 6, characterised in that the valve slide (100) has an injector channel (110) which, in the working position of the pressure sensor (52), is flush with an intake funnel (112) and a working pipe (114) acted upon by a partial vacuum and, in that position, the small diameter end of the injection channel is in communication with a suction pipe (120) of the sensor housing (104), to which suction pipe there is connected the servomotor (72) of the servovalve (14), to which servomotor a partial vacuum can be applied.

8. Installation according to one of claims 4 to 6, characterised in that a vacuum tapping channel (94) which leads into the outlet pipe (50) is provided in the valve housing (46).

9. Installation according to claim 8, characterised in that the vacuum tapping channel (94) has an end portion (96) extending vertically downward in the outlet pipe (50).

10. Installation according to one of claims 1 to 3, characterised in that the servovalve (14) has as the servomotor an electromagnet (132) which is energised in dependence upon the output signal of the column height sensor (52).

11. Installation according to one of claims 1 to 3, characterised in that the servomotor is an electric motor (216), preferably an electric geared motor, and acts on the valve body (44) of the servovalve (14) via a crank drive (210, 212), and means (218, 220) are provided for stopping the electric motor (216) at the bottom dead centre position of the crank drive (210, 212) and in a raised position of the crank drive.

12. Installation according to one of claims 1 to 11, characterised in that an actuating part (60) for the valve body (44) is guided (206, 208) in the valve housing (46, 19) so as to be displaceable along the axis of the valve seat.

13. Installation according to one of claims 1 to 12, characterised in that the included angle of the valve seat face (42) is approximately 60°.

14. Installation according to one of claims 1 to 13, characterised in that the axial dimension of the valve seat face (42) is from approximately 200 % to approximately 300 % of the diameter of the outlet channel (48).

15. Installation according to one of claims 1 to 14, characterised in that the valve body (44) is a hollow, resilient injection-moulded part.

16. Installation according to claim 15, characterised by a support body (186) which is arranged in the interior of the hollow valve body (44) and carries a plurality of support ribs (194, 196) extending in the circumferential direction.

17. Installation according to claim 16, characterised in that the axial spacing of the support ribs (194, 196) corresponds to the axial spacing of the lips (130-1 to 130-5) of the valve body (44).

18. Installation according to claim 16, characterised in that the support ribs (194, 196) are offset in the axial direction with respect to the lips (130-1 to 130-5) of the valve body (44), preferably by one half space.

19. Installation according to one of claims 1 to 18, characterised in that the end of the valve body (44) remote from the valve seat face (42) carries a bellows (72, 72') which surrounds a spring (62) for biasing the valve body (46) and/or a valve-operating part (60) into the closed position.

20. Installation according to claim 19 in conjunction with claim 4, characterised in that the bellows (72; 72') forms the servomotor which can be connected to a vacuum source (94).

21. Installation according to one of claims 1 to 20, characterised in that the column height sensor (52; 160; 164, 202) additionally has an electrical contact (126; 202) which is operated when the specified water column height (H₁) is reached.

22. Installation according to one of claims 1 to 20, characterised in that the inlet (48) of the servovalve (14) is connected to a storage vessel (154).

23. Installation according to claim 22, characterised in that the storage vessel (154) has at its upper end a venting valve (174, 178) operated by a float (164).

24. Installation according to claim 23, characterised in that the prismatic float (164) has bulbous projections (166) which run on a prismatic portion (158) of the storage vessel (154) surrounding the float (164) true to contour.

## Revendications

1. Installation de crachoir pour fauteuil de dentiste, comprenant un crachoir (10), une conduite (12, 16) destinée aux eaux usées et reliée à celui-ci, une soupape asservie (14) disposée dans la conduite (12, 16) destinée aux eaux usées, et un capteur de hauteur de colonne (52 ; 160 ; 164, 202) qui est disposé dans la conduite (12, 16) destinée aux eaux usées en amont de la soupape asservie (14) et qui réagit lorsque la colonne d'eau qui se trouve en amont de la soupape asservie (14) atteint une valeur prédéterminée (H₁), afin de commander alors la soupape asservie dans le sens de l'ouverture, caractérisée par le fait que la soupape asservie (14) comporte une surface conique (42) formant siège de soupape qui converge vers le bas, et que le corps de soupape (44) comporte une surface de commande conique épousant le contour de la surface formant siège de soupape et présentant de préférence une pluralité de lèvres (130-1 à 130-5) qui se suivent à distance dans le sens axial et qui coopèrent avec la surface (42) formant siège de soupape.

2. Installation selon la revendication 1, caractérisée par le fait que le capteur de hauteur de colonne (52) est un capteur de pression communiquant avec l'entrée de l'enveloppe (46) de la soupape asservie (14).

3. Installation selon la revendication 1, caractérisée par le fait que le capteur de hauteur de colonne (52) comporte un détecteur de niveau (160 ; 164, 202) qui est disposé dans la conduite (12, 16) destinée aux eaux usées, en amont de la soupape asservie (14) et à distance de celle-ci.

4. Installation selon l'une des revendications 1 à 3, caractérisée par le fait que la soupape asservie (14) comporte un servomoteur (72) qui peut être relié à une source de dépression (94) ou à une source d'air comprimé.

5. Installation selon la revendication 4, en conjugaison avec la revendication 3, caractérisée par le fait que le capteur de pression (52) ou, respectivement, le détecteur de niveau (160 ; 164, 202) est relié mécaniquement à un indicateur de position à fluide (100) par l'intermédiaire duquel est commandée l'action de la pression sur le servomoteur (72).

6. Installation selon la revendication 5, caractérisée par le fait que le capteur de pression (52) comporte un piston de détection (98), et que l'indicateur de position à fluide comporte un tiroir de valve qui est réalisé sur la tige de piston (100).

7. Installation selon la revendication 6, caractérisée par le fait que le tiroir de valve (100) comporte un canal d'injecteur (110) qui, dans la position de travail du capteur de pression (52), est aligné sur un entonnoir d'aspiration (112) et sur une tubulure de travail (114) soumise à l'action d'une dépression, et dont l'extrémité présentant le plus petit diamètre communique dans cette position avec une tubulure d'aspiration (120) du boîtier (104) du capteur à laquelle est raccordé le servomoteur (72) de la soupape asservie (14), lequel peut être soumis à la dépression.

8. Installation selon l'une des revendications 4 à 6, caractérisée par le fait qu'un canal de prélèvement de la dépression (94) débouchant dans la tubulure de sortie (50) est prévu dans l'enveloppe (46) de la soupape.

9. Installation selon la revendication 8, caractérisée par le fait que le canal de prélèvement de la dépression (94) comporte une partie terminale (96) qui s'étend verticalement vers le bas dans la tubulure de sortie (50).

10. Installation selon l'une des revendications 1 à 3, caractérisée par le fait que la soupape asservie (14) comporte comme servomoteur un électroaimant (132) qui est excité en fonction du signal de sortie du capteur de hauteur de colonne (52).

11. Installation selon l'une des revendications 1 à 3, caractérisée par le fait que le servomoteur est un moteur électrique (216), et de préférence un moteur réducteur électrique, et qu'il agit par l'intermédiaire d'un mécanisme à manivelle (210, 212) sur le corps de soupape (44) de la soupape asservie (14), et par le fait qu'il est prévu des moyens (218, 220) pour arrêter le moteur électrique (216) au point mort bas du mécanisme à manivelle (210, 212) et dans une position haute du mécanisme à manivelle.

12. Installation selon l'une des revendications 1 à 11, caractérisée par le fait qu'une pièce d'actionnement (60) destinée au corps de soupape (44) est guidée en coulissement (206, 208) dans l'enveloppe (46, 90) de la soupape le long de l'axe du siège de la soupape.

13. Installation selon l'une des revendications 1 à 12, caractérisée par le fait que l'angle d'ouverture de la surface (42) formant siège de soupape est d'environ 60°.

14. Installation selon l'une des revendications 1 à 13, caractérisée par le fait que la dimension de la surface (42) formant siège de soupape dans le sens axial est d'environ 200% à environ 300% du diamètre du canal de sortie (50).

15. Installation selon l'une des revendications 1 à 14, caractérisée par le fait que le corps de soupape (44) est une pièce creuse et élastique moulée par injection.

16. Installation selon la revendication 15, caractérisée par un corps d'appui (186) qui est disposé à l'intérieur du corps de soupape creux (44) et qui porte une pluralité de nervures d'appui (194, 196) s'étendant dans la direction de la périphérie.

17. Installation selon la revendication 16, caractérisée par le fait que la distance entre les nervures d'appui (194, 196) dans le sens axial correspond à la distance entre les lèvres (130-1 à 130-5) du corps de soupape (44) dans le sens axial.

18. Installation selon la revendication 16, caractérisée par le fait que les nervures d'appui (194, 196) sont décalées dans la direction axiale par rapport aux lèvres (130-1 à 130-5) du corps de soupape (44), et ce, de préférence, d'un demi-pas.

19. Installation selon l'une des revendications 1 à 18, caractérisée par le fait que l'extrémité du corps de soupape (44) qui est opposée à la surface (42) formant siège de soupape porte un soufflet (72, 72') qui entoure dans la position de fermeture un ressort (62) destiné à rappeler le corps de soupape (44) et/ou une pièce (60) d'actionnement de la soupape.

20. Installation selon la revendication 19, en conjugaison avec la revendication 4, caractérisée par le fait que le soufflet (72, 72') constitue le servomoteur qui peut être relié à la source de dépression (94).

21. Installation selon l'une des revendications 1 à 20, caractérisée par le fait que le capteur de hauteur de colonne (52 ; 160 ; 164, 202) comporte en outre un contact électrique (126 ; 202) qui est actionné lorsque la hauteur de colonne d'eau prédéterminée (H₁) est atteinte.

22. Installation selon l'une des revendications 1 à 20, caractérisée par le fait que l'entrée (48) de la soupape asservie (14) est reliée à un réservoir (154).

23. Installation selon la revendication 22, caractérisée par le fait que le réservoir (154) présente à son extrémité supérieure une soupape de mise à l'atmosphère (174, 178) qui est actionnée par un flotteur (164).

24. Installation selon la revendication 23, caractérisée par le fait que le flotteur prismatique (164) comporte des parties en saillie convexes (166) qui se déplacent sur une partie prismatique (158) du réservoir (154), laquelle entoure le flotteur (164) en épousant son contour.
